(19) **Europäisches Patentamt**
**European Patent Office**
**Office européen des brevets**

(11) **EP 4 567 689 A1**

(12) **EUROPEAN PATENT APPLICATION**
published in accordance with Art. 153(4) EPC

(43) Date of publication:
**11.06.2025 Bulletin 2025/24**

(21) Application number: **23849211.0**

(22) Date of filing: **19.07.2023**

(51) International Patent Classification (IPC):
***G06Q 10/04*** (2023.01)   ***G06Q 10/06*** (2023.01)
***G06Q 50/06*** (2024.01)

(52) Cooperative Patent Classification (CPC):
Y04S 10/50

(86) International application number:
**PCT/CN2023/108064**

(87) International publication number:
**WO 2024/027503 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.08.2022  CN 202210917997**

(71) Applicant: **Wanbang Digital Energy Co., Ltd.**
**Changzhou, Jiangsu 213100 (CN)**

(72) Inventors:
• WANG, Xu
  Changzhou, Jiangsu 213100 (CN)
• CHEN, Shen
  Changzhou, Jiangsu 213100 (CN)
• YU, Xin
  Changzhou, Jiangsu 213100 (CN)
• ZHU, Xuancai
  Changzhou, Jiangsu 213100 (CN)

(74) Representative: **Kurig, Thomas**
**Becker Kurig & Partner**
**Patentanwälte mbB**
**Bavariastraße 7**
**80336 München (DE)**

(54) **METHOD AND APPARATUS FOR PREDICTING HOUSEHOLD ELECTRICITY LOAD**

(57)     Provided in the present invention are a method and apparatus for predicting a household electricity load. The method comprises the following steps: constructing a household electricity load model; according to the household electricity load model, acquiring a calculated load value of a unit time period to be subjected to pre- diction; and correcting the calculated load value of said unit time period by means of a neural network, so as to obtain a predicted load value of said unit time period. The present invention can conveniently and accurately pre- dict a household electricity load, and is relatively low in terms of cost and has a relatively wide application range.

```
┌─────────────────────────────────────────────────────┐   S1
│   A household electricity load model is constructed   │
└─────────────────────────────────────────────────────┘
                          │
                          ▼
┌─────────────────────────────────────────────────────┐   S2
│ The calculated load value of the to-be-predicted unit │
│    time period is acquired according to the           │
│         household electricity load model              │
└─────────────────────────────────────────────────────┘
                          │
                          ▼
┌─────────────────────────────────────────────────────┐   S3
│ The calculated load value of the to-be-predicted unit │
│ time period is corrected through the neural network to│
│ obtain the predicted load value of the to-be-predicted│
│                  unit time period                     │
└─────────────────────────────────────────────────────┘
```

**FIG. 1**

EP 4 567 689 A1

**Description**

Technical Field

This disclosure relates to the field of energy management technology, specifically to a method for predicting household electricity load and an apparatus for predicting household electricity load.

Description of Related Art

Load prediction is an important part of energy management, which may provide key data for energy management. Load prediction technology is mostly used in provincial and municipal power grids or large industrial parks, applied in scenarios such as power generation planning. The load at this level involves a wide range and the load types have aggregated characteristics. Currently, the main load prediction techniques may be broadly classified into four categories: naive methods, classical linear methods, machine learning methods, and deep learning methods. All these methods highly depend on the acquisition of historical data, especially deep learning methods, where model training requires data from the past year or even several years.

As for the residential side, namely household electricity load prediction, especially in the scenario of a single household, on one hand, the storage conditions for historical electricity consumption data are very limited. On the other hand, the use of load has randomness and high uncertainty. Therefore, how to conveniently and accurately achieve the prediction of household electricity load has become an urgent technical problem to be solved.

SUMMARY

To solve the above technical problem, this disclosure provides a method for predicting household electricity load and an apparatus for predicting household electricity load, which may conveniently and accurately achieve household electricity load prediction with lower cost and wider applicability.

The technical solution adopted by this disclosure is as follows:

A method for predicting household electricity load includes the following steps: constructing a household electricity load model; acquiring a calculated load value of a to-be-predicted unit time period according to the household electricity load model; and correcting the calculated load value of the to-be-predicted unit time period through a neural network to obtain a predicted load value of the to-be-predicted unit time period.

The household electricity load model includes a long-term stable load component, a medium-term fluctuating load component, and a short-term random load component.

The long-term stable load component is constructed based on objective factors affecting the load of self-consuming equipment, the medium-term fluctuating load component is constructed based on meteorological factors and seasonal factors, and the short-term random load component is constructed based on historical calculation load values and historical prediction load values.

The objective factors affecting the load of self-consuming equipment include family house area, number of people residing in the household, and geographical location of the house. The meteorological factors include temperature, humidity, radiation dose, and weather type.

The long-term stable load component is:

$$L_{long} = \omega_1 * \omega_2 * \omega_3$$

Wherein, $L_{long}$ represents the long-term stable load component, $\omega_1$, $\omega_2$, $\omega_3$ are electricity load coefficients related to the family house area, the number of people residing in the household, and the geographical location of the house, respectively.

The medium-term fluctuating load component is:

$$L_{mid} = \left(L_{mid,temp} + L_{mid,hum} + L_{mid,irr}\right) * j(ws)$$

Wherein, $L_{mid}$ represents the medium-term fluctuating load component, $L_{mid,temp}$, $L_{mid,hum}$, $L_{mid,irr}$ are electricity load sub-components related to the temperature, humidity, and radiation dose, respectively, and $j(ws)$ is a weather and seasonal correction factor.

The short-term random load component is:

$$L_{short}=\mu+\varphi_1*(L_{t-1}-L_{t-2})+\varphi_2*(L_{t-2}-L_{t-3})-\theta_1*(L_{t-1}-\hat{L}_{t-1})-\theta_2*(L_{t-2}-\hat{L}_{t-3})$$

Wherein, $L_{short}$ represents the short-term random load component, $L_n$ represents the calculated load value of n time periods, $\hat{L}_n$ represents the predicted load value of n time periods, n=t-1, t-2 or t-3, $\mu$ is the mean value of the historical calculated load value sequence, and $\varphi_1$, $\varphi_2$, $\theta_1$, $\theta_2$ are coefficients.

Correction of the calculated load value of the to-be-predicted unit time period is conducted through a neural network, specifically including: constructing a BP neural network; acquiring the error between the predicted load value and the calculated load value of the unit time period preceding the to-be-predicted unit time period; using the error to update the connection weight and the threshold of the BP neural network; inputting the calculated load value of the to-be-predicted unit time period into the updated BP neural network to obtain the predicted load value of the to-be-predicted unit time period.

An apparatus for predicting household electricity load includes: a constructing module, wherein the constructing module is configured to construct a household electricity load model; an acquisition module, wherein the acquisition module is configured to acquire a calculated load value of a to-be-predicted unit time period according to the household electricity load model; a correction module, wherein the correction module is configured to correct the calculated load value of the to-be-predicted unit time period through a neural network to obtain the predicted load value of the to-be-predicted unit time period.

The correction module is specifically configured to: construct a BP neural network; acquire the error between the predicted load value and the calculated load value of the unit time period preceding the to-be-predicted unit time period; use the error to update the connection weight and the threshold of the BP neural network; input the calculated load value of the to-be-predicted unit time period into the updated BP neural network to obtain the predicted load value of the to-be-predicted unit time period.

The advantageous effects of this disclosure are as follows:

This disclosure establishes a household electricity load model and dynamically corrects the calculation results of the model. The disclosure does not require storing a large amount of historical data as training samples, nor is the disclosure limited by geographical location. Therefore, the disclosure may conveniently and accurately achieve household electricity load prediction with lower cost and wider applicability.

BRIEF DESCRIPTION OF THE DRAWINGS

FIG. 1 is a flow chart of a method for predicting household electricity load according to an embodiment of this disclosure.
FIG. 2 is a block diagram of an apparatus for predicting household electricity load according to an embodiment of this disclosure.

DESCRIPTION OF THE EMBODIMENTS

The following description will clearly and completely describe the technical solutions in the embodiments of this disclosure in conjunction with the accompanying drawings of the embodiments. Clearly, the described embodiments are only a part of the embodiments of this disclosure, not all of the embodiments. Based on the embodiments in this disclosure, all other embodiments obtained by those skilled in the art without creative efforts are within the scope of protection of this disclosure.

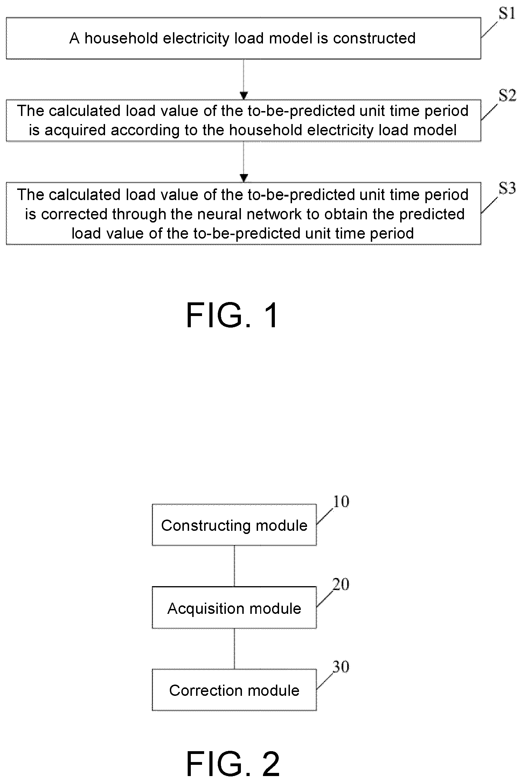

As shown in FIG. 1, the method for predicting household electricity load according to an embodiment of this disclosure includes the following steps:

S1. A household electricity load model is constructed.

The household electricity load model in this embodiment of the disclosure is a mathematical model which includes multiple load components.

In an embodiment of this disclosure, the household electricity load model may include three components: a long-term stable load component, a medium-term fluctuating load component, and a short-term random load component.

The household electricity load model is as follows:

$$L_t = L_{long} + L_{mid} + L_{short}$$

Wherein, $L_{long}$ represents the long-term stable load component, $L_{mid}$ represents the medium-term fluctuating load component, $L_{short}$ represents the short-term random load component, Lt represents the household electricity load in t time periods, which is obtained by summing $L_{long}$, $L_{mid}$, and $L_{short}$. In this embodiment of the disclosure, t represents the to-be-predicted unit time period, that is, $L_t$ is the calculated load value of the to-be-predicted unit time period.

In a specific embodiment of this disclosure, one day may be used as a unit time period.

The long-term stable load is less affected by the user's subjective behavior, including self-consuming electrical devices such as refrigerators and sockets. Therefore, the long-term stable load component may be constructed based on objective factors that affect the load of self-consuming electrical devices. The objective factors affecting the load of self-consuming electrical devices include family house area, number of people residing in the household, and the geographical location of the house. In an embodiment of this disclosure, the long-term stable load component is:

$$L_{long} = \omega_1 * \omega_2 * \omega_3$$

Wherein, $\omega_1$, $\omega_2$, and $\omega_3$ are electricity load coefficients related to family house area, number of people residing in the household, and the geographical location of the house, respectively. These coefficients may be obtained through summarizing or fitting experimental data or survey data.

In a specific embodiment of this disclosure, the relationship between the electricity load coefficient $\omega_1$ and the family house area S is shown in Table 1.

Table 1

| House area $S(m^2)$ | Electricity load coefficient $\omega_1$ |
|---|---|
| $S \leq 60$ | 3 |
| $60 < S \leq 90$ | 5 |
| $90 < S \leq 120$ | 8 |
| $120 < S \leq 150$ | 12 |
| $150 < S \leq 200$ | 16 |
| $200 < S \leq 300$ | 24 |
| $S > 300$ | 24+0.08*(S-300) |

In a specific embodiment of this disclosure, the relationship between the electricity load coefficient $\omega_2$ and the number of people residing in the household nor is:

$$\omega_2 = \frac{1}{250}(3.0357nor^2 + 25.75nor + 99.357)$$

In a specific embodiment of this disclosure, the relationship between the electricity load coefficient $\omega_3$ and the geographical location of the house is shown in Table 2.

Table 2

| Geographical zoning of electricity consumption | Electricity load coefficient $\omega_3$ |
|---|---|
| Type I regions (Beijing, Zhejiang, Shanghai, Jiangsu, Fujian, Guangdong, etc.) | 1 |
| Type II regions (Tianjin, Shandong, Shaanxi, Hunan, Hubei, Guangxi, Hainan, etc.) | 0.67 |
| Type III regions (others) | 0.5 |

The medium-term fluctuating load is highly correlated with weather and user behavior, including some typical electrical appliances such as air conditioners, electric heaters, lighting, etc. Therefore, the medium-term fluctuating load component may be constructed based on meteorological factors and seasonal factors. Meteorological factors include temperature, humidity, radiation dose, and weather type. In an embodiment of this disclosure, electricity load sub-components corresponding to temperature, humidity, and radiation dose may be acquired, and the sum of these electricity load sub-components may be corrected based on weather type and seasonal factors. Specifically, the medium-term fluctuating load component is:

$$L_{mid} = \left(L_{mid,temp} + L_{mid,hum} + L_{mid,irr}\right) * j(ws)$$

Wherein, $L_{mid,temp}$, $L_{mid,hum}$, and $L_{mid,irr}$ are the electricity load sub-components related to temperature, humidity, and radiation dose, respectively, and $j(ws)$ is the weather and seasonal correction factor. Each component and correction factor may also be summarized or fitted through experimental data or survey data.

In a specific embodiment of this disclosure, the electricity load sub-component related to temperature Temp is:

$$L_{mid,temp} = 0.0482 Temp^2 - 0.371 Temp - 5.997$$

In a specific embodiment of this disclosure, the electricity load sub-component related to humidity Hum is:

$$L_{mid,hum} = -0.332 Hum + 3.034$$

In a specific embodiment of this disclosure, the electricity load sub-component related to radiation dose Irr is:

$$L_{mid,irr} = 1.528 Irr - 1.144$$

In a specific embodiment of this disclosure, the weather and seasonal correction factor is:

$$j(ws) = 1/c_{pq}$$

Wherein, $c_{pq}$ represents the regression constant term when the month is p and the weather type is q, and the value of $c_{pq}$ is shown in Table 3.

Table 3

| $C_{pq}(p/q)$ | 1 (sunny) | 2(sunny turning to cloudy) | 3 (cloudy) | 4 (cloudy turning to rain) | 5(rain) |
|---|---|---|---|---|---|
| 3-5 (spring) | 1.493 | 1.689 | 1.949 | 3.571 | 6.536 |
| 6-8 (summer) | 1.405 | 1.443 | 1.859 | 2.985 | 4.184 |
| 9-11 (autumn) | 1.443 | 1.629 | 2.020 | 4.219 | 6.289 |
| 12-2 (winter) | 1.733 | 1.908 | 2.625 | 4.651 | 7.092 |

Short-term random load belongs to the unconventional fluctuating load, which is greatly affected by special events such as users taking leave on workdays, electrical equipment failures, power grid outages, etc. Therefore, the Box-Jenkins time series method may be used for description. In an embodiment of this disclosure, the short-term random load component is constructed based on historical calculated load values and historical predicted load values. The short-term random load component is:

$$L_{short} = \mu + \varphi_1 * (L_{t-1} - L_{t-2}) + \varphi_2 * (L_{t-2} - L_{t-3}) - \theta_1 * (L_{t-1} - \hat{L}_{t-1}) - \theta_2 * (L_{t-2} - \hat{L}_{t-3})$$

Wherein, $L_n$ represents the calculated load value of n time periods, $\hat{L}_n$ represents the predicted load value of n time periods, n = t-1, t-2 or t-3, t-1 represents the unit time period before t, t-2 represents the unit time period before t-1, t-3 represents the unit time period before t-2, $\mu$ is the mean value of the historical calculated load value sequence, $\varphi_1, \varphi_2, \theta_1, \theta_2$ are coefficients. An initial value may be given to each of these coefficients, and then they are updated as the historical calculated load value sequence changes.

S2. The calculated load value of the to-be-predicted unit time period is acquired according to the household electricity load model.

S3. The calculated load value of the to-be-predicted unit time period is corrected through the neural network to obtain the predicted load value of the to-be-predicted unit time period.

In an embodiment of this disclosure, a BP neural network may be constructed, and the error between the predicted load value $\hat{L}_{t-1}$ and the calculated load value $L_{t-1}$ of the unit time period preceding the to-be-predicted unit time period may be acquired. This error is then used to update the connection weight and the threshold (biases) of the BP neural network. Finally, the calculated load value Lt of the to-be-predicted unit time period is input into the updated BP neural network to obtain the predicted load value $\hat{L}_t$ of the to-be-predicted unit time period.

In other words, this embodiment of the disclosure may combine the calculated load value and prediction value of the previous unit time period to dynamically correct the load value of the to-be-predicted unit time period, thereby obtaining a more accurate predicted load value.

Specifically, the BP neural network may first be initialized by defining the number of input layer nodes as 3, the number of hidden layer nodes as 2, and the number of output layer nodes as 1. The input is $\{x_1, x_2, x_3\}$, and the output is Y. The weight from the input layer to the hidden layer is $\omega_{ij}$, the weight from the hidden layer to the output layer is $\omega_{jk}$, the threshold from the input layer to the hidden layer is $a_j$, the threshold from the hidden layer to the output layer is $b_k$, the activation function is $g(x)=\dfrac{1}{1+e^{-x}}$ , and the given learning rate is $\eta$, wherein i=1, 2, 3, j=1, 2, and k=1.

Then, the output $H_j$ of the hidden layer is calculated:

$$H_j=g\left(\sum_{i=1}^{3} \omega_{ij}x_i+a_j\right)$$

The output $O_k$ of the output layer is calculated:

$$O_k=\sum_{j=1}^{2} H_j\omega_{jk}+b_k$$

Furthermore, the input and output sequence is updated using the calculated load value $L_{t-1}$ (including the long-term stable load component, medium-term fluctuating load component, and short-term random load component $L_{t-1,long}$, $L_{t-1,mid}$, $L_{t-1,shart}$ of the previous unit time period) and the predicted load value $\hat{L}_{t-1}$ of the previous unit time period.

$$\begin{cases} x_1,x_2,x_3=L_{t-1,long},L_{t-1,mid},L_{t-1,short} \\ Y=\hat{L}_{t-1} \end{cases}$$

Next, the error is calculated:

$$e_k=\frac{1}{2}(Y-O_k)^2$$

The weight is updated:

$$\begin{cases} \omega_{ij}=\omega_{ij}+\eta H_j(1-H_j)x_i(\omega_{jk}e_k) \\ \omega_{jk}=\omega_{jk}+\eta H_j e_k \end{cases}$$

The threshold is updated:

$$\begin{cases} a_j=a_j+\eta H_j\left(1\text{-}H_j\right)(\omega_{jk}e_k) \\ b_k=b_k+\eta e_k \end{cases}$$

Finally, the output of the updated BP neural network is calculated:

$$\begin{cases} H_j=g\left(\sum_{i=1}^{3}\omega_{ij}x_i+a_j\right) \\ \hat{L}_t=\sum_{j=1}^{2}H_j\omega_{jk}+b_k \end{cases}$$

The final obtained predicted load value $\hat{L}_t$ may serve as important data basis for household energy management.

According to the method for predicting household electricity load in the embodiment of this disclosure, by constructing a household electricity load model and dynamically correcting the calculation results of the model, there is no need to store a large amount of historical data as training samples, and the disclosure is not limited by geographical location. Therefore, it is possible to conveniently and accurately achieve the prediction of household electricity load with lower cost and wider applicability.

Corresponding to the method for predicting household electricity load in the above embodiment, this disclosure further provides an apparatus for predicting household electricity load.

As shown in FIG. 2, the apparatus for predicting household electricity load in an embodiment of this disclosure includes a constructing module 10, an acquisition module 20, and a correction module 30. The constructing module 10 is configured to construct a household electricity load model; the acquisition module 20 is configured to acquire a calculated load value of the to-be-predicted unit time period according to the household electricity load model; the correction module 30 is configured to correct the calculated load value of the to-be-predicted unit time period through a neural network to obtain a predicted load value of the to-be-predicted unit time period.

The household electricity load model in this embodiment of the disclosure is a mathematical model which includes multiple load components.

In an embodiment of this disclosure, the household electricity load model may include three components: a long-term stable load component, a medium-term fluctuating load component, and a short-term random load component.

The household electricity load model is as follows:

$$L_t=L_{long}+L_{mid}+L_{short}$$

Wherein, $L_{long}$ represents the long-term stable load component, $L_{mid}$ represents the medium-term fluctuating load component, $L_{short}$ represents the short-term random load component, Lt represents the household electricity load in t time periods, which is obtained by summing $L_{long}$, $L_{mid}$, and $L_{short}$. In this embodiment of the disclosure, t represents the to-be-predicted unit time period, that is, $L_t$ is the calculated load value of the to-be-predicted unit time period.

In a specific embodiment of this disclosure, one day may be used as a unit time period.

The long-term stable load is less affected by the user's subjective behavior, including self-consuming electrical devices such as refrigerators and sockets. Therefore, the long-term stable load component may be constructed based on objective factors that affect the load of self-consuming electrical devices. The objective factors affecting the load of self-consuming electrical devices include family house area, number of people residing in the household, and the geographical location of the house. In an embodiment of this disclosure, the long-term stable load component is:

$$L_{long}=\omega_1*\omega_2*\omega_3$$

Wherein, $\omega_1$, $\omega_2$, and $\omega_3$ are electricity load coefficients related to family house area, number of people residing in the household, and the geographical location of the house, respectively. These coefficients may be obtained through summarizing or fitting experimental data or survey data.

In a specific embodiment of this disclosure, the relationship between the electricity load coefficient $\omega_1$ and the family house area S is shown in Table 1.

In a specific embodiment of this disclosure, the relationship between the electricity load coefficient $\omega_2$ and the number of people residing in the household nor is:

$$\omega_2 = \frac{1}{250}(3.0357\text{nor}^2 + 25.75\text{nor} + 99.357)$$

In a specific embodiment of this disclosure, the relationship between the electricity load coefficient $\omega_3$ and the geographical location of the house is shown in Table 2.

The medium-term fluctuating load is highly correlated with weather and user behavior, including some typical electrical appliances such as air conditioners, electric heaters, lighting, etc. Therefore, the medium-term fluctuating load component may be constructed based on meteorological factors and seasonal factors. Meteorological factors include temperature, humidity, radiation dose, and weather type. In an embodiment of this disclosure, electricity load sub-components corresponding to temperature, humidity, and radiation dose may be acquired, and the sum of these electricity load sub-components may be corrected based on weather type and seasonal factors. Specifically, the medium-term fluctuating load component is:

$$L_{\text{mid}} = \left(L_{\text{mid,temp}} + L_{\text{mid,hum}} + L_{\text{mid,irr}}\right) * j(\text{ws})$$

Wherein, $L_{\text{mid,temp}}$, $L_{\text{mid,hum}}$, and $L_{\text{mid,irr}}$ are the electricity load sub-components related to temperature, humidity, and radiation dose, respectively, and $j(\text{ws})$ is the weather and seasonal correction factor. Each component and correction factor may also be summarized or fitted through experimental data or survey data.

In a specific embodiment of this disclosure, the electricity load sub-component related to temperature Temp is:

$$L_{\text{mid,temp}} = 0.0482\text{Temp}^2 - 0.371\text{Temp} - 5.997$$

In a specific embodiment of this disclosure, the electricity load sub-component related to humidity Hum is:

$$L_{\text{mid,hum}} = -0.332\text{Hum} + 3.034$$

In a specific embodiment of this disclosure, the electricity load sub-component related to radiation dose Irr is:

$$L_{\text{mid,irr}} = 1.528\text{Irr} - 1.144$$

In a specific embodiment of this disclosure, the weather and seasonal correction factor is:

$$j(\text{ws}) = 1/c_{pq}$$

Wherein, $c_{pq}$ represents the regression constant term when the month is p and the weather type is q, and the value of $c_{pq}$ is shown in Table 3.

Short-term random load belongs to the unconventional fluctuating load, which is greatly affected by special events such as users taking leave on workdays, electrical equipment failures, power grid outages, etc. Therefore, the Box-Jenkins time series method may be used for description. In an embodiment of this disclosure, the short-term random load component is constructed based on historical calculated load values and historical predicted load values. The short-term random load component is:

$$L_{\text{short}} = \mu + \varphi_1 * (L_{t-1} - L_{t-2}) + \varphi_2 * (L_{t-2} - L_{t-3}) - \theta_1 * (L_{t-1} - \hat{L}_{t-1}) - \theta_2 * (L_{t-2} - \hat{L}_{t-3})$$

Wherein, $L_n$ represents the calculated load value of n time periods, $\hat{L}_n$ represents the predicted load value of n time periods, n = t-1, t-2 or t-3, t-1 represents the unit time period before t, t-2 represents the unit time period before t-1, t-3 represents the unit time period before t-2, $\mu$ is the mean value of the historical calculated load value sequence, $\varphi_1, \varphi_2, \theta_1, \theta_2$ are coefficients. An initial value may be given to each of these coefficients, and then they are updated as the historical calculated load value sequence changes.

In an embodiment of this disclosure, the correction module 30 may specifically construct a BP neural network, acquire the error between the predicted load value $\hat{L}_{t-1}$ and the calculated load value $L_{t-1}$ of the unit time period preceding the to-be-predicted unit time period, and use the error to update the connection weight and the thresholds (biases) of the BP neural network. Finally, the calculated load value Lt of the to-be-predicted unit time period is input into the updated BP neural network to obtain the predicted load value $\hat{L}_t$ of the to-be-predicted unit time period.

In other words, the embodiment of this disclosure may combine the calculated load value and prediction value of the previous unit time period to dynamically correct the load value of the to-be-predicted unit time period, thereby obtaining a more accurate predicted load value.

Specifically, the correction process of the correction module 30 is as follows:

The BP neural network may first be initialized by defining the number of input layer nodes as 3, the number of hidden layer nodes as 2, and the number of output layer nodes as 1. The input is $\{x_1, x_2, x_3\}$, and the output is Y. The weight from the input layer to the hidden layer is $\omega_{ij}$, the weight from the hidden layer to the output layer is $\omega_{jk}$, the threshold from the input layer to the hidden layer is $a_j$, the threshold from the hidden layer to the output layer is $b_k$, the activation function is

$$g(x)=\frac{1}{1+e^{-x}}$$

, and the given learning rate is $\eta$, wherein i=1, 2, 3, j = 1, 2, and k=1.

Then, the output $H_j$ of the hidden layer is calculated:

$$H_j=g\left(\sum_{i=1}^{3}\omega_{ij}x_i+a_j\right)$$

The output $O_k$ of the output layer is calculated:

$$O_k=\sum_{j=1}^{2}H_j\omega_{jk}+b_k$$

Furthermore, the input and output sequence is updated using the calculated load value $L_{t-1}$ (including the long-term stable load component, medium-term fluctuating load component, and short-term random load component $L_{t-1,long}$, $L_{t-1,mid}$, $L_{t-1,short}$ of the previous unit time period) and the predicted load value $\hat{L}_{t-1}$ of the previous unit time period.

$$\begin{cases} x_1,x_2,x_3=L_{t-1,long},L_{t-1,mid},L_{t-1,short} \\ Y=\hat{L}_{t-1} \end{cases}$$

Next, the error is calculated:

$$e_k=\frac{1}{2}(Y-O_k)^2$$

The weight is updated:

$$\begin{cases} \omega_{ij}=\omega_{ij}+\eta H_j(1-H_j)x_i(\omega_{jk}e_k) \\ \omega_{jk}=\omega_{jk}+\eta H_j e_k \end{cases}$$

The threshold is updated:

$$\begin{cases} a_j=a_j+\eta H_j(1-H_j)(\omega_{jk}e_k) \\ b_k=b_k+\eta e_k \end{cases}$$

Finally, the output of the updated BP neural network is calculated:

$$\begin{cases} H_j = g\left(\sum_{i=1}^{3} \omega_{ij} x_i + a_j\right) \\ \hat{L}_t = \sum_{j=1}^{2} H_j \omega_{jk} + b_k \end{cases}$$

The final obtained predicted load value $\hat{L}_t$ may serve as important data basis for household energy management.

According to the method for predicting household electricity load in the embodiment of this disclosure, by constructing a household electricity load model and dynamically correcting the calculation results of the model, there is no need to store a large amount of historical data as training samples, and the disclosure is not limited by geographical location. Therefore, it is possible to conveniently and accurately achieve the prediction of household electricity load with lower cost and wider applicability.

In the description of this disclosure, the terms "first" and "second" are used only for descriptive purposes and cannot be understood as indicating or implying relative importance or implicitly specifying the number of technical features indicated. Thus, features defined as "first" and "second" may explicitly or implicitly include one or more of these features. The meaning of "multiple" is two or more, unless otherwise explicitly and specifically limited.

In this disclosure, unless otherwise explicitly specified and limited, terms such as "install", "connect", "link", "fix" and other terms should be understood in a broad sense. For example, it may be a fixed connection, or it may be a detachable connection, or integrated; it may be a mechanical connection, or it may be an electrical connection; it may be directly connected, or it may be indirectly connected through an intermediate medium, it may be the internal communication of two elements or the interaction relationship between two elements. For those skilled in the art, the specific meaning of the above terms in this disclosure can be understood according to specific situations.

In this disclosure, unless otherwise explicitly specified and limited, the first feature "on" or "under" the second feature may mean that the first and second features are in direct contact, or the first and second features are in indirect contact through an intermediate medium. Moreover, the first feature "above", "over" and "on top of" the second feature may mean that the first feature is directly above or diagonally above the second feature, or merely indicate that the horizontal height of the first feature is higher than that of the second feature. The first feature "below", "under" and "underneath" the second feature may mean that the first feature is directly below or diagonally below the second feature, or merely indicate that the horizontal height of the first feature is less than that of the second feature.

In the description of this specification, reference to the description of terms such as "an implementation example", "some implementation examples", "example", "specific example", or "some examples" means that specific features, structures, materials or characteristics described in connection with the implementation example or example are included in at least one implementation example or example of this disclosure. In this specification, the illustrative expressions of the above terms do not necessarily refer to the same implementation example or example. Moreover, the described specific features, structures, materials or characteristics may be combined in any appropriate manner in one or more implementation examples or examples. Furthermore, in the absence of mutual contradiction, those skilled in the art may combine and assemble different implementation examples or examples and features of different implementation examples or examples described in this specification.

Any process or method description in the flow chart or otherwise described herein may be understood as representing a module, segment, or portion of code that includes one or more executable instructions for implementing specific logical functions or steps in the process, and the preferred implementation examples of this disclosure include further implementations in which functions may be executed not in the order shown or discussed, including substantially simultaneous execution or execution in reverse order, depending on the functionality involved, as may be understood by those skilled in the art to which the implementation examples of this disclosure pertain.

The logic and/or steps expressed in the flow chart or otherwise described herein, for example, may be considered as an ordered list of executable instructions for implementing logical functions, which may be specifically implemented in any computer-readable medium for use by or in connection with an instruction execution system, device, or apparatus (such as a computer-based system, a system including a processor, or other system that can fetch instructions from an instruction execution system, device, or apparatus and execute the instructions). For the purposes of this specification, a "computer-readable medium" may be any device that can contain, store, communicate, propagate, or transmit a program for use by or in connection with the instruction execution system, device, or apparatus. More specific examples (non-exhaustive list) of the computer-readable medium include the following: an electrical connection part (electronic device) having one or more wirings, a portable computer diskette (magnetic device), random access memory (RAM), read-only memory (ROM), erasable programmable read-only memory (EPROM or flash memory), an optical fiber device, and a portable compact disc read-only memory (CDROM). In addition, the computer-readable medium may even be paper or another suitable medium on which the program can be printed, because the program can be electronically captured, for example, by optically scanning the paper or other medium, then editing, interpreting, or processing in other suitable ways if necessary, and then storing it in computer memory.

It may be understood that the various parts of this disclosure may be implemented by hardware, software, firmware, or a combination thereof. In the above implementation examples, multiple steps or methods may be implemented by software or firmware stored in memory and executed by an appropriate instruction execution system. For example, if implemented by hardware, as in another implementation example, it may be implemented using any of the following techniques known in the art or a combination thereof: discrete logic circuits with logic gates for implementing logic functions on data signals, application specific integrated circuits with appropriate combination logic gates, programmable gate arrays (PGA), field programmable gate arrays (FPGA), etc.

Those skilled in the art may understand that all or part of the steps carried by the method of the above implementation examples can be instructed to complete the relevant hardware through a program, and the program may be stored in a computer-readable storage medium. The program, when executed, includes one or a combination of the steps of the method implementation examples.

Moreover, in the various implementation examples of this disclosure, the functional units may be integrated into one processing module, or may exist physically as separate units, or two or more units may be integrated into one module. The integrated module mentioned above may be implemented in the form of hardware or in the form of a software functional module. If the integrated module is implemented in the form of a software functional module and sold or used as an independent product, it may also be stored in a computer-readable storage medium.

Although the implementation examples of this disclosure have been shown and described above, it may be understood that the above implementation examples are exemplary and cannot be understood as limitations of this disclosure. Those skilled in the art may make changes, modifications, substitutions, and variations to the above implementation examples within the scope of this disclosure.

**Claims**

1. A method for predicting a household electricity load, **characterized in that**, comprising the following steps:

    constructing a household electricity load model;
    acquiring a calculated load value of a to-be-predicted unit time period according to the household electricity load model;
    correcting the calculated load value of the to-be-predicted unit time period through a neural network to obtain a predicted load value of the to-be-predicted unit time period.

2. The method for predicting the household electricity load according to claim 1, **characterized in that**, the household electricity load model comprises a long-term stable load component, a medium-term fluctuating load component, and a short-term random load component.

3. The method for predicting the household electricity load according to claim 2, **characterized in that**, the long-term stable load component is constructed based on objective factors affecting a load of self-consuming equipment, the medium-term fluctuating load component is constructed based on meteorological factors and seasonal factors, and the short-term random load component is constructed based on historical calculation load values and historical prediction load values.

4. The method for predicting the household electricity load according to claim 3, **characterized in that**, the objective factors affecting the load of the self-consuming equipment comprise a family house area, the number of people residing in a household, and a geographical location of a house, the meteorological factors comprise temperature, humidity, radiation dose, and weather type.

5. The method for predicting the household electricity load according to claim 4, **characterized in that**, the long-term stable load component is:

$$L_{long} = \omega_1 * \omega_2 * \omega_3$$

wherein $L_{long}$ represents the long-term stable load component, $\omega_1, \omega_2, \omega_3$ are electricity load coefficients related to the family house area, the number of people residing in the household, and the geographical location of the house, respectively.

6. The method for predicting the household electricity load according to claim 4, **characterized in that**, the medium-term fluctuating load component is:

$$L_{mid}=\left(L_{mid,temp}+L_{mid,hum}+L_{mid,irr}\right)*j(ws)$$

wherein $L_{mid}$ represents the medium-term fluctuating load component, $L_{mid,temp}$, $L_{mid,hum}$, $L_{mid,irr}$ are electricity load sub-components related to the temperature, the humidity, and the radiation dose, respectively, and $j(ws)$ is a weather and seasonal correction factor.

7. The method for predicting the household electricity load according to claim 4, **characterized in that**, the short-term random load component is:

$$L_{short}=\mu+\varphi_1*(L_{t-1}-L_{t-2})+\varphi_2*(L_{t-2}-L_{t-3})-\theta_1*\left(L_{t-1}-\hat{L}_{t-1}\right)-\theta_2*\left(L_{t-2}-\hat{L}_{t-3}\right)$$

wherein $L_{short}$ represents the short-term random load component, $L_n$ represents a calculated load value of n time periods, $\hat{L}_n$ represents a predicted load value of the n time periods, n=t-1, t-2 or t-3, $\mu$ is a mean value of the historical calculated load value sequence, and $\varphi_1$, $\varphi_2$, $\theta_1$, $\theta_2$ are coefficients.

8. The method for predicting the household electricity load according to any one of claims 1-7, **characterized in that**, correction of the calculated load value of the to-be-predicted unit time period is conducted through the neural network, specifically comprising:

   constructing a BP neural network;
   acquiring an error between a predicted load value and a calculated load value of a unit time period preceding the to-be-predicted unit time period;
   using the error to update a connection weight and a threshold of the BP neural network;
   inputting the calculated load value of the to-be-predicted unit time period into the updated BP neural network to obtain the predicted load value of the to-be-predicted unit time period.

9. An apparatus for predicting a household electricity load, **characterized in that**, comprising:

   a constructing module, wherein the constructing module is configured to construct a household electricity load model;
   an acquisition module, wherein the acquisition module is configured to acquire a calculated load value of a to-be-predicted unit time period according to the household electricity load model;
   a correction module, wherein the correction module is configured to correct the calculated load value of the to-be-predicted unit time period through a neural network to obtain a predicted load value of the to-be-predicted unit time period.

10. The apparatus for predicting the household electricity load according to claim 9, **characterized in that**, the correction module is specifically configured to:

   construct a BP neural network;
   acquire an error between a predicted load value and a calculated load value of a unit time period preceding the to-be-predicted unit time period;
   use the error to update a connection weight and a threshold of the BP neural network;
   input the calculated load value of the to-be-predicted unit time period into the updated BP neural network to obtain the predicted load value of the to-be-predicted unit time period.

S1

A household electricity load model is constructed

S2

The calculated load value of the to-be-predicted unit time period is acquired according to the household electricity load model

S3

The calculated load value of the to-be-predicted unit time period is corrected through the neural network to obtain the predicted load value of the to-be-predicted unit time period

# FIG. 1

10

Constructing module

20

Acquisition module

30

Correction module

# FIG. 2

## INTERNATIONAL SEARCH REPORT

| | International application No. |
|---|---|
| | **PCT/CN2023/108064** |

**A.    CLASSIFICATION OF SUBJECT MATTER**

G06Q10/04(2023.01)i;  G06Q10/06(2023.01)i;  G06Q50/06(2012.01)i

According to International Patent Classification (IPC) or to both national classification and IPC

**B.    FIELDS SEARCHED**

Minimum documentation searched (classification system followed by classification symbols)

IPC:G06Q

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 家庭, 居民, 用电, 电力, 负荷, 预测, 分量, 模型, 公式, 算式, 函数, 修正, 神经网络, family, household, electrical load, prediction, model, formulation, function, BP

**C.    DOCUMENTS CONSIDERED TO BE RELEVANT**

| Category* | Citation of document, with indication, where appropriate, of the relevant passages | Relevant to claim No. |
|---|---|---|
| PX | CN 115392544 A (WANBANG DIGITAL ENERGY CO., LTD. et al.) 25 November 2022 (2022-11-25)<br>claims 1-10, and description, paragraphs [0006]-[0134] | 1-10 |
| Y | CN 112633577 A (XI'AN UNIVERSITY OF ARCHITECTURE AND TECHNOLOGY) 09 April 2021 (2021-04-09)<br>description, paragraphs [0006]-[0059], and figures 1-5 | 1-10 |
| Y | CN 113887814 A (GUANGDONG POWER GRID COMPANY et al.) 04 January 2022 (2022-01-04)<br>description, paragraphs [0004]-[0035] | 1-10 |
| Y | CN 111598330 A (STATE GRID HEBEI ELECTRIC POWER SUPPLY CO., LTD. ELECTRIC POWER RESEARCH INSTITUTE et al.) 28 August 2020 (2020-08-28)<br>description, paragraphs [0005]-[0036], and figures 1-4 | 3-8 |
| A | CN 107248740 A (ELECTRIC POWER RESEARCH INSTITUTE, GUIZHOU POWER GRID CO., LTD.) 13 October 2017 (2017-10-13)<br>entire document | 1-10 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2023** | **03 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/108064**

| Patent document cited in search report | | | Publication date (day/month/year) | Patent family member(s) | | | Publication date (day/month/year) |
|---|---|---|---|---|---|---|---|
| CN | 115392544 | A | 25 November 2022 | None | | | |
| CN | 112633577 | A | 09 April 2021 | None | | | |
| CN | 113887814 | A | 04 January 2022 | None | | | |
| CN | 111598330 | A | 28 August 2020 | None | | | |
| CN | 107248740 | A | 13 October 2017 | CN | 107248740 | B | 24 March 2020 |

Form PCT/ISA/210 (patent family annex) (July 2022)